# EUROPEAN PATENT APPLICATION

(11) **EP 4 379 614 A1**
(43) Date of publication of application: **05.06.2024**
(21) Application number: 22210847.4
(22) Date of filing: 01.12.2022
(51) Int. Cl.: G06N 10/60

(54) **A METHOD FOR GENERATING A DATA PACKAGE TO BE COMPUTED BY A QUANTUM COMPUTER, COMPUTER PROGRAM PRODUCT, COMPUTER-READABLE STORAGE MEDIUM AS WELL AS ELECTRONIC COMPUTING DEVICE**

(71) Applicant: VOLKSWAGEN AG, 38440 Wolfsburg (DE)
(72) Inventor: Yarkoni, Sheir, 81543 München (DE); Compostella, Dr. Gabriele, 81547 München (DE); Cattelan, Michele, 80636 München (DE)

(57) **Abstract**

A method for generating a data package to be computed by a quantum computer, computer program product, computer-readable storage medium as well as electronic computing device

Method for generating a data package (5) to be computed by a quantum computer (6) by an electronic computing device (1), comprising the steps of: providing a quadratic unconstrained binary optimization problem (8) for a transforming module (3) of the electronic computing device (1) (S2, S3); retrieving at least one redundancy in the quadratic unconstrained binary optimization problem (8) by a compiler (4) of the electronic computing device (1) (S4); removing the at least one retrieved redundancy from the quadratic unconstrained binary optimization problem (8) to a reduced quadratic unconstrained binary optimization problem (9) by the compiler (4) (S4) and generating the data package (5) to be computed by the quantum computer (6) depending on the reduced quadratic unconstrained binary optimization problem (9) by the compiler (4). (S5) Furthermore, the invention relates to a computer program product, a computer-readable storage medium as well as to an electronic computing device (1).

## Description

The invention relates to a method for generating a data package to be computed by a quantum computer by an electronic computing device. Furthermore, the invention relates to a computer program product, a computer-readable storage medium as well as to an electronic computing device.

A major pillar of quantum computing research is applying quantum optimization algorithms to solve real-world combinatorial optimization problems. One significant bottleneck is modeling the optimization problems correctly in the representation necessary for quantum computers. This requires mapping the problem to the model by hand, as well as significant hand-tuning of model parameters to ensure that solutions for the quantum computer are correct for the application being modeled. This often involves reformulating problem constrains to the model specifications.

Furthermore, there exist some open-source Python libraries that perform parts of the constraint mapping automatically between optimization problems and the quantum computing models. Current external solutions map the input, in particular the optimization problem, to the so-called QUBO model for quantum computers. The QUBO model may be defined as a Quadratic Unconstrained Binary Optimization. However, they do not account for the efficiency of the input in describing the decided optimization problem, which in general is difficult to do by inspection. This often results in redundant information in the QUBO model, which creates overhead for the quantum computers when trying to solve the optimization problems.

US 10, 275, 422 B2 discloses methods and systems representing constraint as an Ising model penalty function and a penalty gap associated therewith, the penalty gap separating a set of feasible solutions to the constraint from a set of infeasible solutions to the constraint; and determines the Ising model penalty function subject to the bounds on the programmable parameters in post by the hardware limitations of the second processor, where the penalty gap exceeds a predetermined threshold greater than 0. Such may be employed to find quantum binary optimization problems and associated gap values employing a variety of techniques.

US 10, 733, 877 B2 discloses a traffic flux maximization method and system to control traffic flow by combining classical computing machine learning to predict traffic flux minimization before its occurrence, with quantum annealing to optimize future positions of vehicles. Vehicles are redirected to minimize the travel time for each vehicle, taking into account other vehicles in the road network.

It is an object of the invention to provide a method, a computer program product, a computer-readable storage medium as well as an electronic computing device, by which a more efficient way for computing data by a quantum computer is realized.

This object is solved by a method, a computer program product, a computer-readable storage medium as well as an electronic computing device according to the independent claims. Advantageous forms of configurations are presented in the dependent claims.

One aspect of the invention relates to a method for generating a data package to be computed by a quantum computer by an electronic computing device. In an embodiment input data to be computed are provided to an input module of the electronic computing device. The input data are transformed to a quadratic unconstraint binary optimization (QUBO) problem depending on the provided data by a transforming module of the electronic computing device. At least one redundancy in the quadratic unconstraint binary optimization problem is retrieved by a compiler of the electronic computing device. The at least one retrieved redundancy is removed from the quadratic unconstraint binary optimization problem to a reduced quadratic unconstraint binary optimization problem by a compiler. The data package to be computed by the quantum computer is generated depending on the reduced quadratic unconstraint binary optimization problem by the compiler.

Therefore, a method is presented to inspect either the input data, in particular in the form of a constraint optimization problem, or a given QUBO representing a constrained optimization problem and remove redundant information in order to improve the efficiency of compilation onto quantum hardware.

In particular, reducing the size of the QUBO, which represents the quadratic unconstrained binary optimization problem for quantum computers programmatically in an applicationagnostic way without sacrificing the quality or feasibility of the solutions to the problem. Specifically, the optimization problems encoded in the QUBO to circuits/models with reduced qubit, gates or connectivity counts. This is a result from the key observation that in constrained optimization problems, which represent almost all application-relevant problems, feasible solutions can be either incentivized or infeasible solutions can be penalized, and it is redundant to do both. According to the method this redundancy is to be fined directly by inspecting the QUBO, finding the intersection between incentivization and penalization, and removing the intersection in a way that does not violate the constraints of the problem. In some cases, in particular when all feasible solutions are incentivized or penalized, determining the minimum set of information needed to encode this feasibility and remove the rest is performed, does significantly reduce the compound size of the problem. Lastly, the method is a high-efficient compilation possible in certain scenarios, and no more efficient compilation techniques exists.

The provided method is also relevant to any non-quantum optimization procedure which solves QUBO problems, since the compiler produces a more efficient QUBO representation of the same optimization problem.

According to an embodiment, the input data is provided with constraint functions and/or objective functions. In particular, input data is usually a set of constraints and objective functions. Together this completely describes the combinatorial optimization problem. Constraints define the feasible region of the problem, and the objective function defines the target for optimality.

According to another embodiment, the constraints are implemented as high-penalty additive terms in objective functions. To constrain problems in QUBO, these constraints need to be implemented as high-penalty additive terms in the objective function such that is never favorable to reduce the objective function value at the expense of violating a constraint. When the input data to formulate the problem is given, it is known exactly how to set such penalties since they can be calculated to ensure feasible solutions obey this property. Special cases of constraints which may be called penalty and incentive functions can also be considered, which act to incentivize and penalize specific regions of the feasible solution space of the optimization problem. When these are given as part of the input data, it is known that any shared terms between them are overconstraining the problem, and so can be identified by the intersection between these penalties. This information may be stored and repeat this procedure until all the sections have been identified. An output may be for example penalty coefficients and penalty intersections.

Alternatively, an independent aspect of the invention, it is also possible that only the QUBO (quadratic unconstraint binary optimization problem) is given directly, where it is still possible to identify sets of constraints within the QUBO using specific algebraic signatures that must exist in order for the constraints to be valid in the QUBO. All variables which appear in a constraint are connected to all other variables within the same constraint, which may be called the algebraic property. By examining each variable and looking at its connections, identifying exactly the set of all constraints in which each variable appears is performed. This is what may be referred to as the inherent structure in the QUBO, which is identified and stored at this stage for each variable. It may also be possible to identify the minimum set of penalties in the QUBO since it is known that they should not violate constraints, in particular another algebraic property, and store this information as a complementary to the structure of the QUBO. Then, anything that is not in these constraints is the objective function, which may be further inspected. First, terms in the objective function may be directly identified, which violate constraints, in particular wrongly-scaled functions which break constraints which are already identified. This can be returned as feedback to the user as a warning. Furthermore, solutions which have been penalized based on the identified penalties can be identified, and stored. An output may be for example the inferred constraints, inferred penalty coefficient inferred objective function.

According to another embodiment, the quadratic unconstrained binary optimization problem is transformed in such a way that the minimum of the quadratic unconstrained binary optimization problem is both feasible and optimal as defined by the input data. Therefore, this step uses the input data to formulate the problem as the QUBO such that the minimum of the QUBO is both feasible and optimal as defined by the input.

In another embodiment, the quadratic unconstrained binary optimization problem is inspected by extracting basic algebraic properties in such a way that the inherent structure in the problem which informs on the feasible solutions base for the combinatorial optimization problem is inferred. Therefore, an examination of the QUBO problem directly is performed by extracting some basic algebraic properties which infer inherent structure in the problem which informs on the feasible solutions base for the combinatorial optimization problem.

In another embodiment, the inherent structure is stored in a storage device of the electronic computing device. Therefore, the inherent structure can be used for further processing.

In another embodiment the redundancies are retrieved depending on the detected inherent structure. In particular, this may be a so-called compilation. Using the inherent structure detected, the redundancies can be calculated in the form of overlaps between subsets of structures, and eliminate these intersections as this represents overconstraining of the feasible space. If the input data is provided, which is not required, the assumptions can also be relaxed on redundancy and remove more information to construct the new representation of the QUBO. This new QUBO will have fewer variables or connections between variables, but will describe the exact same feasible region as the original problem. This can then be directly compiled into the set of instructions for a quantum computer.

In another embodiment, the redundancies are retrieved by searching for overlaps between subsets in the inherent structure. Furthermore, for removing the redundancies eliminating intersections is performed. Removing the intersections identified between any subset of constraints in the previous step is performed, as these are over constraining the problem on the variables in the intersection. The intersection is removed from all constraints in the subset except one, and therefore does not change the feasible region of the original problem. In another step comparing the remaining terms between each constraint and every other constraint which is known has no redundancy anymore. Therefore, an easy check is performed, if the remaining penalties are the most efficient way to constrain the interactions between constraints. If they are not, a more efficient way may be chosen, such that many fewer terms in the problems are used to constrain the feasible space between the constraints without violating them. If necessary, all redundant terms are stored in memory and are discarded from the QUBO and new terms are inserted to replace them. This is repeated until all constraints have been recompiled and no more improvements can be made. The new compiled QUBO is returned to the user. The output may be decompiled QUBO and record of changes.

According to another embodiment, input data is additionally transmitted to the compiler and the input data is considered by removing the at least one retrieved redundancy from the quadratic unconstrained binary optimization problem. As already mentioned, this has the advantages, that the input data, which is provided, may relax the assumptions on redundancy and remove more information to construct the new representation of the QUBO. This new QUBO will have fewer variables or connections between variables, but will describe the exact same feasible region as the original problem. This can then be directly compiled into a set of instructions for a quantum computer.

In another embodiment, the generated data package is transmitted to a quantum computer for computing the data package. In particular, the quantum computer that executes the set of instructions given by the compilation using the generated data package.

According to another embodiment, the input data is generated by a device of a motor vehicle. For example, data from a process to be optimized, for example traffic, sensors, locations, delivery requests, schedules, or productions are input data for the optimization problem.

In particular, the method is a computer-implemented method. Therefore, another aspect of the invention relates to a computer program product comprising program code means for performing a method according to the preceding aspect.

Another aspect of the invention relates to a computer-readable storage medium comprising the computer program product according to the preceding aspect. The computer program product may also be regarded as a computer program.

Another aspect of the invention relates to a computer-readable storage medium comprising the computer program product according to the preceding aspect.

Another aspect of the invention relates to an electronic computing device for generating a data package to be computed by a quantum computer, comprising at least one input module, one transforming module and one compiler, wherein the electronic computing device is configured for performing a method according to the preceding aspect. In particular, the method is performed by the electronic computing device.

The electronic computing device may comprise processors, circuits, in particular integrated circuits, and further electronic means for performing a method according to the preceding aspect.

Advantageous forms of the method are to be regarded as advantageous forms of the electronic computing device.

Therefore, the electronic computing device may comprise means for performing the method.

The invention also comprises the combinations of the features of the different embodiments.

In the following an exemplary implementation of the invention is described. The figures show:
Fig. 1 a schematic flow chart according to an embodiment of the invention;
Fig. 2 a schematic block diagram according to an embodiment of the invention; and
Fig. 3 another schematic block diagram according to an embodiment of the invention.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

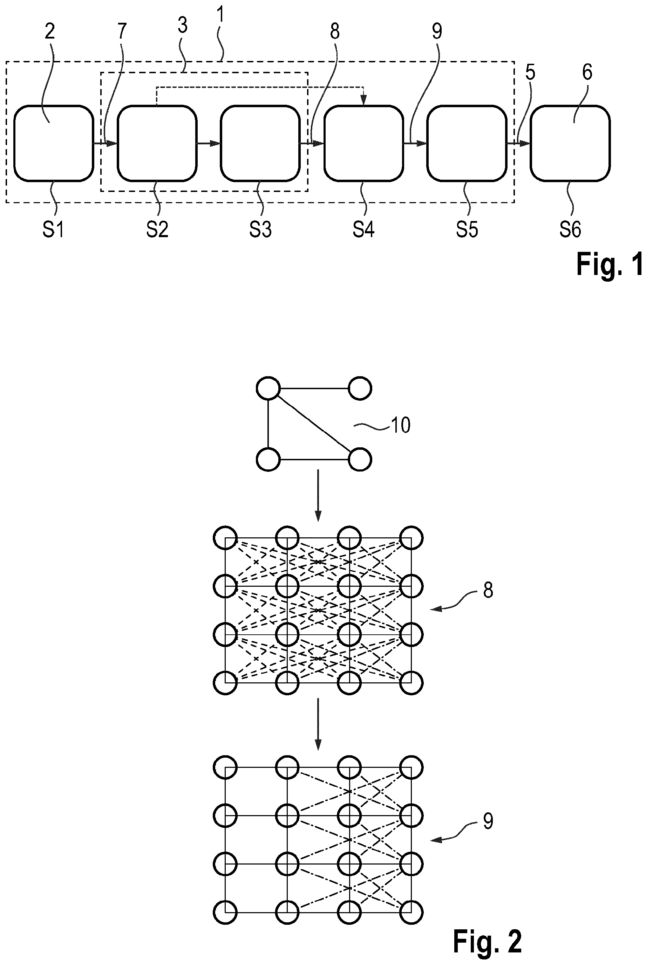

Fig. 1 shows a schematic flow chart according to an embodiment of the method. In particular, Fig. 1 shows an electronic computing device 1 comprising one input model 2, one transforming module 3 and one compiler 4. The electronic computing device 1 is for generating a data package 5 to be computed by a quantum computer 6.

According to the shown embodiment in a first step S1 input data 7 to be computed are provided for an input model 2 of the electronic computing device. In a second step S2 the input data 7 are transformed to a quadratic unconstrained binary optimization problem depending on the provided data 7 by the transforming module 3 of the electronic computing device 1. In particular, the second step S2 describes the optimization problem, which may be for example a combinatorial optimization problem to optimize a process, for example objective function, cost model, constraints or furthermore, formed from the input data 7. Furthermore, in that step a third step S3 is performed, which describes the QUBO problem, wherein the QUBO problem is the quadratic unconstraint binary optimization representation whose optimal yield solutions to be combinatorial optimization problem.

A fourth step S4 builds the so-called compilation step for filtering the QUBO to a reduced number of instructions needed to be executed on the quantum computer 6. This yields a more efficient use of the quantum computer 6 to improve accuracy or reduce runtime, which can be inferred from the optimization problem to identify more inefficient instructions. In particular, the four steps provide retrieving at least one redundancy in the quadratic unconstrained binary optimization problem by the compiler 4 of the electronic computing device 1. Furthermore, the fourth step S4 removes the at least one retrieved redundancy from the quadratic unconstraint binary optimization problem 8 to reduce quadratic unconstrained binary optimization problem 9. The data package 5 to be computed by the quantum computer 6 is generated in a fifth step S5, depending on the reduced quadratic unconstrained binary optimization problem 9. Furthermore, a sixth step S6 is shown, wherein the sixth step S6 the quantum computer 6 computes the data package 5.

In particular Fig. 1 shows, that the input data 7 is usually a set of constraints and an objective function. Together this completely describes the combinatorial optimization problem. Constraints define the feasible region of the problem and the objective function defines the target for optimality. In the transforming module 3 the QUBO is transformed. This step uses the input data 7 to formulate the problems as the QUBO such that the minimum of the QUBO is both feasible and optimal as defined by the input. In the compiler 4, an inspection may be performed. Thereby examination the QUBO problem directly is performed, and by extracting some basic algebraic properties an inherent structure in the problem which informs on the feasible solutions base for the combinatorial optimization problem is inferred. This structure is stored in a memory for the next step. In the compiler 4 the detected structure is used to calculate the redundancies in the form of overlaps between subsets of structures, and illuminate the intersection as this represents over constraining of the feasible space. If the input data 7 is provided, which is not required, the assumptions on the redundancy can be relaxed and more information to construct the new representation of the QUBO can be removed. This new QUBO will have fewer variables or connections between variables, but will describe the exact same feasible region as the original problem. This can then be directly compiled into a set of instructions for the quantum computer 6, which may be referred to as the data package 5.

The quantum computer 6 executes the set of instructions given by the compilation using the method.

Fig. 2 shows a schematic block diagram according to an embodiment of the invention. In particular, Fig. 2 shows a so-called case C+A. Input data 7 may be for example constraints, and objective function. A graph 10 is given and should be compiled to a QUBO such that the minimum tells whether there is a so-called Hamiltonian path, for example a path that visits all nodes exactly once. This is a well-known hard optimization problem with exponential complexity to solve in the worst case.

In the next step the problem is formulated as a QUBO, which is shown in the middle picture. Each row represents a step in the pass and each column represents a possible node to visit. The continuous lines represent the given constraints of the problem, in this case it can only visit one node at a time, and cannot visit a node more than once. To allow only steps between nodes that are connected, penalty terms are added between any two nodes that are not connected by an edge in the original graph in consecutive rows of the QUBO. This is shown with the dot-dash line. An incentive term is added between any two nodes that are connected by an edge on the original graph in consecutive rows of the QUBO, which is represented by the dashed line.

In the inspection step, from the given constraints it is known that all of the variables between each two constraints must be either penalized or incentivized to allow the correct steps from one node to the next. This means, that performing both operations is redundant, since any penalization has a complimentary incentivization. Each pair of constraints is inspected, identifying the redundancies for each variable, recording the set of penalties in these constraints and storing them for the next step. This is repeated for every pair of constraints.

From the previous step it is known which terms to remove in order to preserve the original problem, and so removing either the penalties or the incentives between the two constraints, which ever has more terms, yielding the minimum set of information. Storing which terms were removed from the QUBO is performed. Repeating this for every pair of the constraints until no more improvements can be made is performed, and storing the compiled reduced QUBO is performed. An output is the compiled QUBO and record of changes. Using the compiled QUBO a quantum circuit or model can be constructed. Since each term of the QUBO represents at least one operation circuit or term in the model, it is guaranteed that the compiled QUBO results in a more efficient quantum circuit or model, since it has fewer terms than at the start. The provided method be also applied to a "gate-model", a "circuit model", "digital" quantum computers for quantum circuits and "quantum annealers" or "analog" quantum processors for models.

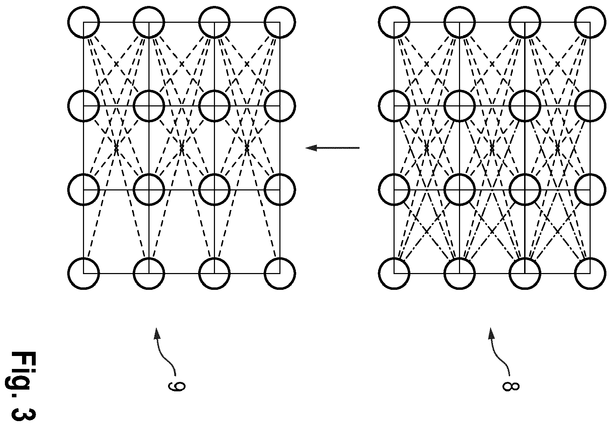

Fig. 3 shows another schematic block diagram according to an embodiment of the invention. Fig. 3 shows the so-called case C. Input data 7 is the QUBO itself. Starting directly with a QUBO the continuous line from before can be directly identified, or groupings of multiple lines combined. This is identified as the structure of the problem using the algebraic signatures. For each variable storing which constraints which were identified it to belong to is performed. Furthermore, a direct comparison between each structure identified and all the others can be performed, and can directly be inspected which subsets of every pair share all terms and therefore a constraint. This information can be stored for each pair of constraints.

Using the information from the previous step, some amount of information from the reminder of the problem can be inferred. For each pair of the constraint structures identified, identifying when the subsets of variables are over constrained is performed, and removing the minimum amount of information from the problem is performed. This is different from the case C+A according to Fig. 2, since the original input data 7 was used and now could infer the maximum amount of information to remove. In this case only identifying the minimum amount of information that is constraining a subset of variables and remove this may be performed. The terms removed are recorded. This process is repeated for every pair of constraints until no more terms can be removed. An output may be the compiled QUBO and the record of changes. Using the compiled QUBO a quantum circuit or model can be constructed. Since each term in the QUBO represents at least one operation the circuit or term in the model, it may be guaranteed that the compiled QUBO results in a more efficient quantum circuit or model, since it has fewer terms than at the start. The provided method be also applied to a "gate-model", a "circuit model", "digital" quantum computers for quantum circuits and "quantum annealers" or "analog" quantum processors for models.

### List of reference signs

- 1: Electronic computing device
- 2: Input module
- 3: Transforming module
- 4: Compiler
- 5: Data package
- 6: Quantum computer
- 7: Input data
- 8: Quadratic unconstraint binary optimization problem
- 9: Reduced quadratic unconstraint binary optimization problem
- 10: Graph
- S1-S6: Steps of the method

## Claims

1. Method for generating a data package (5) to be computed by a quantum computer (6) by an electronic computing device (1), comprising the steps of:
- Providing a quadratic unconstrained binary optimization problem (8) for a transforming module (3) of the electronic computing device (1); (S2, S3)
- Retrieving at least one redundancy in the quadratic unconstrained binary optimization problem (8) by a compiler (4) of the electronic computing device (1); (S4)
- Removing the at least one retrieved redundancy from the quadratic unconstrained binary optimization problem (8) to a reduced quadratic unconstrained binary optimization problem (9) by the compiler (4); (S4) and
- Generating the data package (5) to be computed by the quantum computer (6) depending on the reduced quadratic unconstrained binary optimization problem (9) by the compiler (4). (S5)

2. Method according claim 1, wherein input data (7) to be computed are provided for an input module (2) of the electronic computing device (1) and the input data (7) are transformed to a quadratic unconstraint binary optimization problem (8) depending on the provided data by the transforming module (3) of the electronic computing device (1).

3. Method according to claim 2, wherein the input data (7) is provided with constraints functions and/or objective functions.

4. Method according to claim 3, wherein the constraints are implemented as high-penalty additive terms in the objective functions.

5. Method according to any of the claims 2 to 4, wherein the quadratic unconstrained binary optimization problem (8) is transformed in such a way that the minimum of the quadratic unconstrained binary optimization problem (8) is both feasible and optimal as defined by the input data (7).

6. Method according to any of the preceding claims, wherein the quadratic unconstrained binary optimization problem (8) is inspected by extracting basic algebraic properties in such a way that inherent structure in the problem which informs on the feasible solution space for the combinatorial optimization problem is inferred.

7. Method according to claim 6, wherein the inherent structure is stored in a storage device of the electronic computing device (1).

8. Method according to claim 6 or 7, wherein the redundancies are retrieved depending on the detected inherent structure.

9. Method according to claim 8, wherein the redundancies are retrieved by searching for overlaps between subsets in the inherent structure.

10. Method according to claim 9, wherein for removing the redundancies, intersections are eliminated.

11. Method according to any of the preceding claims, wherein input data (7) is additionally transmitted to the compiler (4) and the input data (7) is considered by removing the at least one retrieved redundancy from the quadratic unconstrained binary optimization (8) problem.

12. Method according to any of the preceding claims, wherein the generated data package (5) is transmitted to the quantum computer (6) for computing the data package (5).

13. Computer program product comprising program code means for performing a method according to any of claims 1 to 12.

14. Computer-readable storage medium comprising the computer program product according to claim 13.

15. Electronic computing device (1) for generating a data package (5) to be computed by a quantum computer (6), comprising at least one transforming module (3) and one compiler (4), wherein the electronic computing device (1) is configured for performing a method according to any of claims 1 to 12.
